# EUROPÄISCHE PATENTSCHRIFT

(11) **EP 3 314 933 B1**
(45) Veröffentlichungstag und Bekanntmachung des Hinweises auf die Patenterteilung: **11.08.2021**
(21) Anmeldenummer: 16732448.2
(22) Anmeldetag: 24.06.2016
(51) Int. Cl.: H04W 8/20, H04W 4/60

(54) **KOMMUNIZIEREN EINES TEILNEHMERIDENTITÄTSMODULS ZU EINEM SERVER, INSBESONDERE BEI PROFILWECHSEL**
COMMUNICATING A SUBSCRIBER IDENTITY MODULE TO A SERVER, IN PARTICULAR UPON CHANGING PROFILES
COMMUNICATION D'UN MODULE D'IDENTITÉ D'ABONNÉ À UN SERVEUR, EN PARTICULIER EN CAS DE CHANGEMENT DE PROFIL

(30) Priorität: 25.06.2015 DE 102015008179
(43) Veröffentlichungstag der Anmeldung: 02.05.2018
(73) Patentinhaber: Giesecke+Devrient Mobile Security GmbH, 81677 München (DE)
(72) Erfinder: NITSCH, Nils, 85570 Markt Schwaben (DE); HUBER, Ulrich, 81475 München (DE)
(74) Vertreter: Ter Meer Steinmeister & Partner
(86) Internationale Anmeldenummer: PCT/EP2016/001084
(87) Internationale Veröffentlichungsnummer: WO 2016/206813

(56) Entgegenhaltungen:
- EP-A1- 2 276 294
- WO-A1-2007/133139
- US-A1- 2012 106 533
- US-A1- 2015 156 679
- Gsm Association: "Remote Provisioning Architecture for Embedded UICC Technical Specification Version 2.0", , 13. Oktober 2014 (2014-10-13), XP055262151, Gefunden im Internet: URL:http://www.gsma.com/connectedliving/wp -content/uploads/2014/10/SGP02-Remote-Prov isioning-Architecture-for-Embedded-UICC-Te chnical-Specification-v2.0.pdf [gefunden am 2016-04-01] in der Anmeldung erwähnt

## Beschreibung

### Gebiet der Erfindung

Die Erfindung betrifft ein Verfahren zum Kommunizieren eines in einem Endgerät implementierten oder implementierbaren Teilnehmeridentitätsmoduls, in dem mindestens ein Profil zu Nutzung des mobilen Endgeräts in einem Mobilfunknetzwerk eingerichtet ist, gegenüber einem Server, insbesondere anlässlich eines Profilwechsels.

### Stand der Technik

Zur Nutzung eines mobilen Endgeräts wie Smartphones oder Mobiltelefons in einem Mobilfunknetzwerk eines Netzbetreibers enthält das Endgerät ein Teilnehmeridentitätsmodul mit einem Subskriptions-Profil (Subskriptions-Profil = Satz von Teilnehmeridentitätsdaten), oder auch nur kurz Profil. Das Subskriptions-Profil ist durch einen Datensatz gebildet, der den Aufbau, Betrieb und Abbau einer Verbindung des Endgeräts im Mobilfunknetzwerk ermöglicht. Der Datensatz kann in einer Dateistruktur angelegt sein. Der Datensatz umfasst Daten, umfassend wiederum allgemeine Daten und Authentisierungsdaten ("Credentials"), und Applikationen. Insbesondere umfasst der Datensatz - als ein Credential - einen kryptographischen Authentisierungs-Schlüssel Ki, sowie eine International Mobile Subscriber Identity IMSI. Das Teilnehmeridentitätsmodul kann beispielsweise als entfernbare Plug-In (U,C)SIM-Karte (SIM = Subscriber Identity Module) oder UICC (Universal Integrated Circuit Card) gestaltet sein, oder als festeingelötetes (bzw. zum Festeinlöten vorgesehenes) eUICC (embedded UICC) oder e(U,C)SIM.

SIM und USIM bezeichnen Teilnehmeridentitätsmodule mit einer Technologie gemäß dem von ETSI gepflegten Standard 3GPP, der GSM und UMTS umfasst. CSIM bezeichnet ein Teilnehmeridentitätsmodul mit einer Technologie gemäß dem Standard 3GPP2, der CDMA2000 umfasst.

Mittlerweile werden auch Teilnehmeridentitätsmodule mit mehreren Profilen vorgeschlagen, von denen in der Regel jeweils nur eines in einem aktiven Zustand oder Status "enabled" ist, und weitere Profile in einem inaktiven Zustand oder Status "disabled" sind.

Das Dokument [1] SGP02-Remote-Provisioning-Architecture-for-Embedded-UICC-Technical-Specification-v2.0, 13 October 2014, GSMA beschreibt die Fernwartung von Profilen in einem Teilnehmeridentitätsmodul in Gestalt eines eUICC mittels eines Sub Man Secure Router SM-SR. Gemäß [1] Kap. 5.3.5 lässt sich mittels einer im eUICC ausgeführten Funktion "ProfileEnable" ein Profil im eUICC aktivieren, also in einen aktiven Zustand oder Status versetzen (schalten). Die Funktion vermag, nach Ausführung einen Funktions-Ausführungs-Status auszugeben, der angibt, ob die Aktivierung erfolgreich war. Dieser Status kann in einer Status-Nachricht an den Sub Man Secure Router SM-SR gesendet werden.

Das Dokument [2] DE 10 2012 018 540 A1 aus dem Stand der Technik offenbart ein Teilnehmeridentitätsmodul mit zwei Subskriptions-Profilen, zwischen denen geschaltet werden kann.

Das Dokument [3] WO 2013/075873 A1 aus dem Stand der Technik offenbart ein Teilnehmeridentitätsmodul mit zwei Subskriptions-Profilen, zwischen denen geschaltet werden kann.

Das Dokument [4] WO 2014/131785 A1 aus dem Stand der Technik offenbart ein Verfahren zum Statuswechsel in einem Teilnehmeridentitätsmodul mit mehreren Subskriptions-Profilen. Durch ein von einem Subscription Manager Server an das Teilnehmeridentitätsmodul gesendetes Status-Kommando "enable" oder "disable" lässt sich ein Status eines Profils zwischen aktiv und inaktiv verändern. Dem Status-Kommando, das der Server sendet, können Response-Parameter und ein Response-Modus beigefügt sein, durch welche durch den Server festgelegt wird, in welcher Form das Teilnehmeridentitätsmodul einen Response (d.h. eine Antwort) an den Server zu senden hat.

Das Dokument [6] WO 2007/133139 A1 aus dem Stand der Technik offenbart ein Teilnehmeridentitätsmodul mit mehreren Subskriptions-Profilen, zwischen denen geschaltet werden kann, wobei eine benutzerseitige Auswahl einer Profilpräferenz durch eine netzwerkseitige Steuerung realisiert wird.

Das Dokument [7] US 2012/0106533 A1 aus dem Stand der Technik offenbart ein Teilnehmeridentitätsmodul mit mehreren Subskriptions-Profilen. Das Modul empfängt eine Nachricht von einem Programmiersystem mit der Aufforderung, sofort Aktualisierungen aus dem Programmiersystem abzufragen (polling request). Zum Senden der Abfrage werden verfügbare Basisstationen abgesucht und auf Basis des gefundenen Typs von Basisstation dann eine Technologie zum Senden der Abfrage ausgewählt.

Abhängig von der im Teilnehmeridentitätsmodul verwendeten Technologie (z.B. 3GPP oder 3GPP2) sind Datenverbindungen und Datenelemente (z.B. Short Message Service Nachrichten SMS), die das Teilnehmeridentitätsmodul mit einem Server des Mobilfunknetzwerks austauscht, unterschiedlich kodiert. Findet in einem Teilnehmeridentitätsmodul ein Profilwechsel zwischen Profilen statt, die unterschiedlichen Technologien unterliegen, kann daher durch einen Profilwechsel die Erreichbarkeit und/oder Sendefähigkeit des Endgeräts verloren gehen oder zumindest beeinträchtigt werden. Hierdurch kann insbesondere die Situation eintreten, dass nach einem Profilwechsel, mit dem ein Technologiewechsel einhergeht, das Teilnehmeridentitätsmodul nicht mehr in der Lage ist, dem Sub Man Secure Router SM-SR mitzuteilen, dass der Profilwechsel stattgefunden hat.

In [4] WO 2014/131785 A1 wird die Erreichbarkeit und/oder Sendefähigkeit des Endgeräts bei einem Profilwechsel gewährleistet, indem dem Status-Kommando, mit dem er Profilwechsel durchgeführt wird, Response-Parameter und ein Response-Modus beigefügt werden, die dem zu aktivierenden Profil entsprechen. Hierdurch erhöht sich das OTA zu übertragende Datenvolumen zumindest um die Angaben für die Response-Parameter und den Response-Modus. Bei einem autarken Profilwechsel innerhalb des Teilnehmeridentitätsmodul, ohne Beauftragung des Profilwechsels seitens des Servers, ist das Verfahren aus [4] WO 2014/131785 A1 zudem nicht anwendbar und die Erreichbarkeit und/oder Sendefähigkeit des Endgeräts kann dennoch verloren gehen.

### Zusammenfassung der Erfindung

Der Erfindung liegt die Aufgabe zu Grunde, ein effizientes Verfahren zum Kommunizieren eines Teilnehmeridentitätsmodul, in dem mindestens ein Profil zu Nutzung eines mobilen Endgeräts in einem Mobilfunknetzwerk eingerichtet ist, gegenüber einem Server zu schaffen, bei dem die Erreichbarkeit und/oder Sendefähigkeit des Endgeräts möglichst gut gewährleistet bleibt. Insbesondere soll ein solches Verfahren zum Kommunizieren angegeben werden, das bei einem Profilwechsel einsetzbar ist. Das Verfahren soll insbesondere bei einem autarken Profilwechsel einsetzbar sein, der innerhalb des Teilnehmeridentitätsmoduls, ohne eine Beauftragung des Profilwechsels seitens des Servers, durchgeführt wird.

Die Aufgabe wird gelöst durch ein Verfahren nach Anspruch 1. Vorteilhafte Ausgestaltungen der Erfindung sind in abhängigen Ansprüchen angegeben.

Das Verfahren nach Anspruch 1 ist eingerichtet zum Kommunizieren eines in einem Endgerät implementierten oder implementierbaren Teilnehmeridentitätsmodul (eUICC), in dem mindestens ein Profil zu Nutzung des mobilen Endgeräts in einem Mobilfunknetzwerk eingerichtet ist, gegenüber einem Server. Bei dem wird Verfahren eine Nachricht vom Teilnehmeridentitätsmodul an den Server gesendet. Das Verfahren ist dadurch gekennzeichnet, dass vor dem Senden der Nachricht im Teilnehmeridentitätsmödul ein Schritt des Ermittelns einer Technologie durchgeführt wird, in welchem ermittelt wird, welcher Technologie das Profil entspricht, und das Senden gezielt konform mit der Technologie durchgeführt wird.

Da vor dem Senden der Nachricht die Technologie ermittelt wird und das Senden gezielt Technologie-konform erfolgt, ist einem Misslingen des Sendens vorgebeugt, das im Stand der Technik durch Inkompatibilität zwischen im Teilnehmeridentitätsmodul vorausgesetzter Technologie und beim Senden tatsächlich verwendeten technologischen Einstellungen entstehen kann. Im Stand der Technik erfolgt ein Technologie-konformes Senden höchstens zufällig, z.B. in Fällen, in denen kein Technologiewechsel stattfindet. Somit ist die Sendefähigkeit des Teilnehmeridentitätsmoduls sichergestellt. Ebenso kann ein Kommunikationspartner, der eine wie oben beschrieben gesendete Nachricht erhält, anhand der Nachricht die Technologie erkennen und eine Technologie-konforme Antwort-Nachricht an das Teilnehmeridentitätsmodul zurücksenden. Somit ist auch die Erreichbarkeit des Teilnehmeridentitätsmoduls sichergestellt.

Zusammenfassend ist daher gemäß Anspruch 1 ein Verfahren geschaffen, bei dem die Erreichbarkeit und/oder Sendefähigkeit des Endgeräts möglichst gut gewährleistet bleibt.

Wahlweise ist als Server ein Subscription Management Server, insbesondere SubMan Secure Router SM-SR, vorgesehen.

Wahlweise ist als Technologie 3GPP oder / und 3GPP2 vorgesehen ist. Hierbei kann wahlweise in einem einzigen Profil durchgängig eine Technologie verwendet sein. Alternativ sind in einem einzigen Profil mehrere Technologien vorgesehen.

Wahlweise ist als Nachricht eine Status-Nachricht vorgesehen ist, durch welche eine Statusänderung, insbesondere Aktivierung oder Deaktivierung, des Profils angezeigt wird.

Wahlweise ist das im Teilnehmeridentitätsmodul vorgesehene Profil zunächst in einem aktiven Status ist. Dabei ist als Nachricht eine Status-Nachricht vorgesehen, durch welche ein Profil-Wechsel von dem Profil zu einem weiteren im Teilnehmeridentitätsmodul implementierten Profil angezeigt wird. Gerade bei einem Profilwechsel ist es wichtig, dass das Endgerät sendefähig bleibt. Hierdurch ist gewährleistet, dass der Profilwechsel an den Server mitgeteilt werden kann, auch dann wenn mit dem Profilwechsel ein Technologiewechsel einhergeht, beispielsweise von CSIM zu USIM oder umgekehrt. Im Stand der Technik hingegen kann ein Profilwechsel unentdeckt bleiben, da das Teilnehmeridentitätsmodul durch den Profilwechsel die Sendefähigkeit verliert und der Server somit fälschlich annimmt, das ursprüngliche Profil wäre nach wie vor aktiv. Nachfolgende weitere Kommunikation zwischen Server und Teilnehmeridentitätsmodul unter dieser Annahme wird ebenfalls fehlschlagen.

Wahlweise ist insbesondere weiter zunächst das (ursprüngliche) Profil im Teilnehmeridentitätsmodul als aktives Profil gestaltet, das also einen aktiven Status hat. Zusätzlich zu dem Profil ist mindestens ein weiteres Profil implementiert, das als inaktives Profil gestaltet ist, das also einen inaktiven Status hat. Zumindest meistens hat nur jeweils ein Profil auf einmal in einem aktiven Status. Bei dem Verfahren wird ein Profil-Wechsel durchgeführt, indem das zunächst aktive Profil deaktiviert wird, so dass es in einen inaktiven Status versetzt wird. Weiter wird eines der weiteren Profile aktiviert, so dass das weitere Profil in einen aktiven Status versetzt wird. Nach dem Profil-Wechsel wird die Status-Nachricht an den Server gesendet. Wenn zuerst das aktive Profil deaktiviert wird und anschließend das weitere Profil aktiviert wird, ist durchgängig nur ein Profil aktiv. Wird hingegen zuerst eines der weiteren Profile aktiviert und im unmittelbaren Anschluss daran das ursprünglich aktive Profil deaktivert, so ist zumindest meistens nur ein einziges Profil auf einmal aktiv, bis auf den kurzen Zeitraum zwischen Aktivierung des neuen Profils und Deaktivierung des alten Profils. Vorzugsweise wird der Profilwechsel jedoch durch ein Schalten zwischen zwei Profilcontainern durchgeführt, so dass das Deaktivieren des alten (zunächst aktiven) Profils und das Aktivieren des neuen Profils durch ein und denselben Schritt durchgeführt wird. Wahlweise wird der Profilwechsel von einem ursprünglich aktiven "alten" zu einem neuen Profil durchgeführt, indem, bei zunächst aktivem altem Profil, der Profil-Container des neuen Profils als zu aktivierender Profil-Container festgesetzt wird, anschließend ein RESET Kommando an das Teilnehmeridentitätsmodul gesendet wird, in Reaktion auf den RESET das aktive Profil vom Profil-Container des alten Profils zum Profil-Container des neuen Profils geschaltet wird, und schließlich die normale Kommunikation begonnen wird, beginnend mit einem ATR (Answer to Reset) und ggf. nachfolgenden APDUs. Das Profilschalten wird hierbei nach dem RESET und vor dem ATR durchgeführt. Statt RESET könnte ggf. auch ein vom technischen Effekt gleichwertiges, anderes Kommando verwendet werden.

Wahlweise werden anlässlich des Schritts des Ermittelns der Technologie, auf Grundlage eines Ergebnisses des Ermittelns, ein oder mehrere Kommunikationswege festgelegt, welche zur Kommunikation des Teilnehmeridentitätsmoduls gegenüber dem Server nachfolgend verwendet werden. Insbesondere können mehrere gemäß einer Anwendungsvorschrift, insbesondere gemäß einer Priorisierung oder Auswahl, geordnete Kommunikationswege festgelegt werden. Wahlweise kann jeweils ein Kommunikationsweg einer Technologie zugeordnet sein, wahlweise jeweils ein unterschiedlicher Kommunikationsweg, wahlweise aber auch in manchen oder allen Fällen derselbe Kommunikationsweg.

Wahlweise umfassen die Kommunikationswege einen oder mehrere der folgenden: eine Datenverbindung, eine Short-Message-Service-Verbindung (SMS), eine Sprachnachrichten-Verbindung (Fachterminus "Voice"), eine SS-Strings-Verbindung, eine USSD-Strings-Verbindung.

Wahlweise sind in einem einzelnen Profil zumindest zwei Teilbereiche vorgesehen, die unterschiedlichen Technologien (z.B. USIM und CSIM) entsprechen, wobei für die zumindest zwei unterschiedlichen Technologien jeweils ein unterschiedlicher Kommunikationsweg festgelegt wird, z.B. für USIM LTE Datenverbindung und für CSIM Sprachverbindung, oder umgekehrt.

Wahlweise ist die vom Teilnehmeridentitätsmodul an den Server zu sendende bzw. gesendete Nachricht in ein 3-way-Handshake-Protokoll eingebettet. Dabei wird die Nachricht als erste Nachricht gesendet. Gemäß dem 3-way-Handshake-Protokoll ist nach dem Senden der ersten Nachricht eine zweite Nachricht vom Server an das Teilnehmeridentitätsmodul zu senden, und nach dem Senden der zweiten Nachricht ist eine dritte Nachricht vom Teilnehmeridentitätsmodul an den Server zu senden. Im vollständig durchgeführten 3-way-Handshake-Protokoll werden alle drei Nachrichten gesendet. Im Stand der Technik kann es zu Abbrüchen im Protokoll auf Grund von verloren gegangener Sendefähigkeit durch unerkannten Technologiewechsel kommen. Solche Abbrüche sind mit der Erfindung verhindert.

Wahlweise werden Nachrichten, mit denen ein Profilwechsel mitgeteilt wird, in einem 3-way-Handshake-Protokoll eingebettet kommuniziert, und andere Nachrichten in einem 2-way-Handshake-Protokoll eingebettet kommuniziert. Die besonders kritische Nachricht über den Profilwechsel wird im 3-way-Handshake-Protokoll gesendet, das eine höhere Sicherheit bietet. Weniger kritische nachfolgende allgemeine Nachrichten werden im datensparsameren 2-way-Handshake-Protokoll übertragen.

Wahlweise wird der Schritt des Ermittelns einer Technologie durchgeführt, indem ein Parameter, der einen für eine Technologie spezifischen Parameter-Wert hat, ermittelt wird.

Wahlweise wird zur Parameterermittlung ein Parameterfeld (z.B. ADF) ausgelesen. Dies kann wahlweise durch direktes, zielgerichtetes Auslesen geschehen. Alternativ kann das Parameterfeld ausgelesen werden, indem ein Kommando, z.B. ein ISO / IEC 7816-4 Kommando wie AUTHENTICATE oder ein ETSI TS 102 223 PROVIDE LOCATION INFORMATION im Teilnehmeridentitätsmodul verarbeitet wird, anlässlich dessen Verarbeitung der Parameter verwendet wird. Hierbei wird anlässlich der Kommando-Verarbeitung beiläufig auch das Parameterfeld ausgelesen.

Wahlweise ist der Technologie ein logischer Kanal gemäß ISO/IEC 7816-4, insbesondere der Basiskanal Kanal 0, zugeordnet oder ggf., falls mehrere Technologien im Profil vorhanden sind, jeder Technologie ein eigener logischer Kanal gemäß ISO/IEC 7816-4 zugeordnet.

### Kurze Beschreibung der Zeichnungen

Im Folgenden wird die Erfindung an Hand von Ausführungsbeispielen und unter Bezugnahme auf die Zeichnungen näher erläutert, in der zeigen:
Fig. 1 ein Schaubild über ein Profil für eine Mobilfunk-Subskription;
Fig. 2 ein Detail-Schaubild des in Fig. 1 gezeigten Applikationsdatenfeldes;
Fig. 3 ein Schaubild zur Veranschaulichung der Erfindung;
Fig. 4 ein weiteres Schaubild zur Veranschaulichung der Erfindung;
Fig. 5 ein Schaubild zur Veranschaulichung des Ermittelns einer Technologie über das Verarbeiten eines Kommandos INTERNAL AUTHENTICATE im Teilnehmeridentitätsmodul.

### Detaillierte Beschreibung von Ausführungsbeispielen

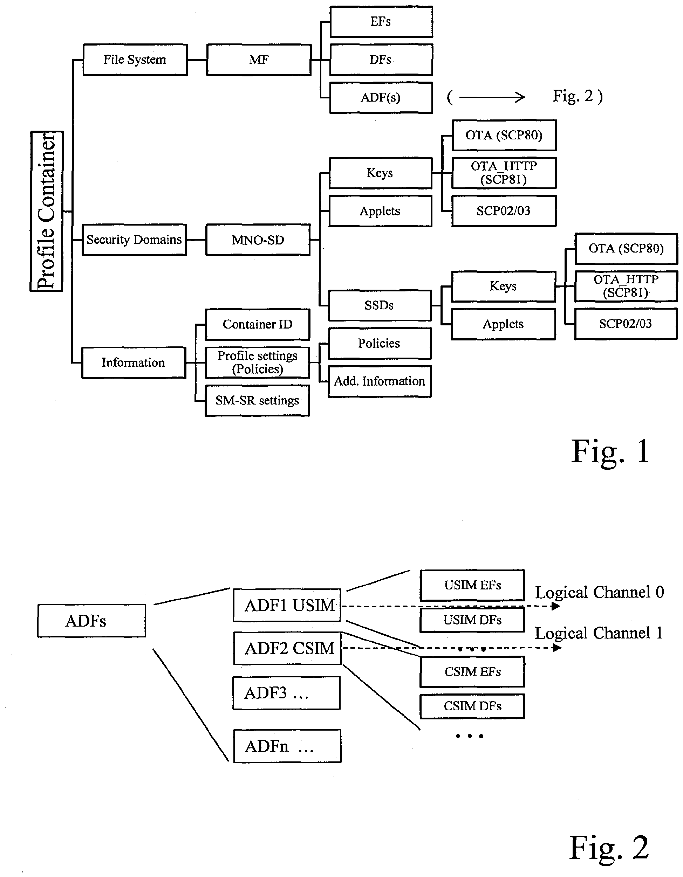

Fig. 1 zeigt ein Schaubild über ein Profil für eine Mobilfunk-Subskription, das vom Grundaufbau her gemäß dem Stand der Technik ISO / IEC 7816-4 aufgebaut ist, und das zur Verwirklichung der Erfindung geeignet ist. Das Profil ist in Fig. 1 beispielhaft in einem Profil-Container "Profile Container" abgelegt. In Fig. 1 und Fig. 2 sind verbreitet englischsprachige Fachbegriffe verwendet, die in relevanten technischen Standards verwendet werden, und die teils auch im Deutschen verwendet werden ohne ins Deutsche übersetzt zu werden. Der Profil-Container enthält ein Dateisystem "File System", das wiederum ein Masterfile MF enthält. Dem Masterfile MF untergeordnet oder nebengeordnet enthält der Profil-Container Elementardateien "Elemenentary Files" EFs, dedizierte Dateien "Dedicated Files" DFs und Applikationsdatendateien "Application Data Files" ADFs.

Für die Erfindung von besonderer Bedeutung sind die Applikationsdatendateien "Application Data Files" ADFs, wie anhand von Fig. 2 im Detail dargestellt wird. Das Profil enthält mindestens eine Applikationsdatendatei "Application Data File" ADF1, der wiederum EFs und DFs untergeordnet sind, wie in Fig. 2 schematisch gezeigt ist. Im Application Data File ADF1 ist insbesondere eine Technologie angegeben, unter welcher das Profil betrieben, für ADF1 z.B. USIM.

Weiter von Bedeutung im Zusammenhang mit der Erfindung ist das Objekt "SM-SR-Settings", in welchem unter Anderem festgehalten sein kann, welcher Kommunikationsweg (z.B. SMS, Sprachverbindung, Datenverbindung) zu verwenden ist, dabei ggf. welcher Kommunikationsweg abhängig von gewissen Bedingungen.

Ein bestimmter Kommunikationsweg kann optional auch bereits bei der Produktion des Teilnehmeridentitätsmoduls (traditionell teils noch als "Kartenproduktion" bezeichnet, selbst wenn der Formfaktor nicht notwendig mehr der einer Karte ist) als Standard-Kommunikationsweg festgesetzt worden sein, der verwendet wird, sofern keine ausdrückliche anderslautende Anweisung für einen Kommunikationsweg erteilt wird.

Fig. 2 zeigt, gemäß einer Ausführungsform der Erfindung, einen Bereich von Applikationsdatendateien "Application Data Files" ADFs, in welchem mehrere Applikationsdatendateien "Application Data Files" ADFs ADF1, ADF2, ADF3, ... ADFn enthalten sind. Eine erste Applikationsdatendatei ADF1 ist für die Technologie USIM eingerichtet. Eine zweite Applikationsdatendatei ADF2 ist für die Technologie CSIM eingerichtet. Für das unter USIM betriebene erste ADF1 ist der Basiskanal "Logical Channel 0" gemäß ISO / IEC 7816-4 belegt. Für das unter CSIM betriebene zweite ADF2 ist ein vom Basiskanal unterschiedliche Kanal "Logical Channel 1" gemäß ISO / IEC 7816-4 belegt. Für weitere ADFs und Technologien können weitere logische Kanäle belegt sein.

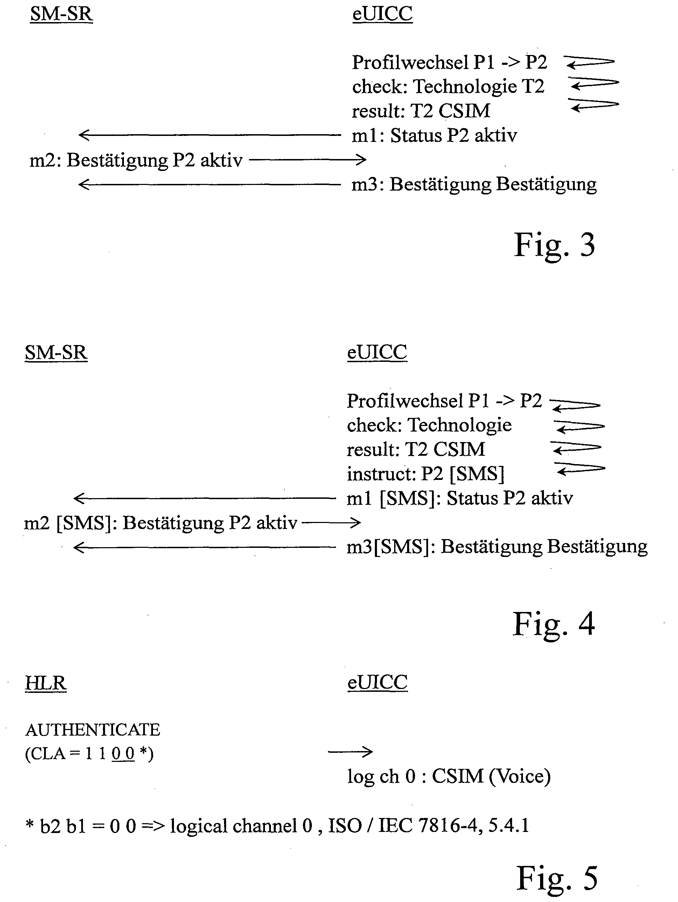

Fig. 3 zeigt ein Schaubild, in welchem ein Verfahren zum Kommunizieren eines Teilnehmeridentitätsmoduls eUICC gegenüber einem Server SM-SR anlässlich eines Profil-Wechsels veranschaulicht ist, gemäß einer ersten Ausführungsform der Erfindung. Der Server ist als Subscription Management Secure Router SM-SR gemäß [1] SGP02-Remote-Provisioning-Architecture-for-Embedded-UICC-Technical-Specification-v2.0, 13 October 2014, GSMA gestaltet. Im Beispiel aus Fig. 3 ist in jedem Profil P1, P2, entsprechend einer Basisform der Erfindung, jeweils nur eine einzige Technologie festgesetzt.

Im Teilnehmeridentitätsmodul eUICC sind ein zunächst aktives Profil P1 und ein weiteres Profil P2 implementiert. Jedes der beiden Profile P1, P2 ist beispielsweise in einem eigenen Profile Container wie dem in Fig. 1, Fig. 2 gezeigten abgelegt. Im Applikationsdatenfeld ADF ist die für das Profil verwendete Technologie (bzw. mehrere Technologien, vgl. Fig. 2) festgelegt. Unterschiedliche Profile können hierbei unterschiedlichen Technologien unterliegen. Das Teilnehmeridentitätsmodul eUICC führt intern einen Profil-wechsel vom zunächst aktiven Profil P1 zum weiteren Profil P2 durch, aktiviert also das weitere Profil P2 und deaktiviert das zunächst aktive Profil P1 (wie und ggf. in welcher Reihenfolge auch immer). Der Profilwechsel kann vorzugsweise komplett autark im Teilnehmeridentitätsmodul eUICC erfolgen, alternativ aber auch von extern vom Server SM-SR angestoßen sein. Nach dem Profilwechsel prüft (Pseudo-Kommando "check") das Teilnehmeridentitätsmodul eUICC, welcher Technologie das neue aktive Profil P2 entspricht und ermittelt als Technologie T2 von P2 die Technologie CSIM. Nachfolgend teilt das Teilnehmeridentitätsmodul eUICC in einem 3-way-Handshake an den Server SM-SR mit, dass nun das weitere Profil P2 das aktive Profil ist. Hierzu sendet das Teilnehmeridentitätsmodul eUICC eine erste Status-Nachricht m1 an den Server SM-SR. Der Server SM-SR empfängt die erste Nachricht m1 und weiß nun, dass der Kommunikationsweg vom Teilnehmeridentitätsmodul eUICC zum Server SM-SR funktioniert. Der Server SM-SR sendet an das Teilnehmeridentitätsmodul eUICC eine zweite Nachricht m2 als Bestätigung über den Empfang der ersten Nachricht m1. Das Teilnehmeridentitätsmodul eUICC empfängt die zweite Nachricht m2 und weiß nun, dass beide Kommunikationswege zwischen Teilnehmeridentitätsmodul eUICC und Server SM-SR funktionieren. Das Teilnehmeridentitätsmodul eUICC sendet an den Server SM-SR auf die zweite Nachricht m2 hin eine dritte Nachricht m3, als Bestätigung über den Empfang der ersten Bestätigung. Der Server SM-SR empfängt die dritte Nachricht m3 und weiß nun, dass beide Kommunikationswege zwischen Teilnehmeridentitätsmodul eUICC und Server SM-SR funktionieren.

Fig. 4 zeigt ein Schaubild, in welchem ein Verfahren zum Kommunizieren eines Teilnehmeridentitätsmoduls eUICC gegenüber einem Server SM-SR anlässlich eines Profil-Wechsels veranschaulicht ist, gemäß einer zweiten Ausführungsform der Erfindung. Vom Grundsatz her ist das Verfahren analog wie dasjenige aus Fig. 3 aufgebaut. Zusätzlich wird im Verfahren nach Fig. 4 nach dem Ermitteln der im weiteren Profil P2 zutreffenden Technologie, hier ebenfalls CSIM, festgesetzt (Pseudo-Kommando "instruct"), dass für das nun aktive weitere Profil P2, mit Technologie CSIM, der Kommunikationsweg der Short-Message-Service Nachrichten SMS verwendet werden soll. Entsprechend werden die erste, zweite und dritte Nachricht m1, m2, m3 in Form von Short-Message-Service Nachrichten SMS versandt. Statt SMS kann alternativ Datenverbindung als Kommunikationsweg festgesetzt werden.

Das "instruct" Kommando, mit dem der Kommunikationsweg festgesetzt wird, kann beispielsweise Teil des GSMA ENABLE Kommandos sein, mit welchem ein Profil aktiviert wird.

In Weiterbildungen der zweiten Ausführungsform gemäß Fig. 4 wird mittels "instruct" eine Liste von priorisierten Kommunikationswegen festgesetzt. Beispielsweise wird festgesetzt, dass zunächst SMS-Versand der ersten Nachricht m1 versucht wird. Falls der Versand mittels SMS fehlschlägt, wird als nächstes ein Versand über eine Datenverbindung versucht. Wahlweise wird erst Datenverbindung, dass SMS versucht.

Fig. 5 zeigt ein Schaubild zur Veranschaulichung des Ermittelns einer Technologie T, hier CSIM, über das Verarbeiten eines Kommandos INTERNAL AUTHENTICATE im Teilnehmeridentitätsmodul eUICC. Das ETSI Home Location Register HLR sendet an das Teilnehmeridentitätsmodul eUICC eine Authentisierungsanfrage. In Reaktion erstellt das Teilnehmeridentitätsmodul eUICC ein AUTHENTICATE APDU gemäß [5] ISO / IEC 7816-4. Zur Erstellung des AUTHENTICATE APDU muss das Teilnehmeridentitätsmodul eUICC ohnehin intern die verwendete Technologie ermitteln. Die so ermittelte Information über die verwendete Technologie wird für die Auswahl des Kommunikationsweges verwendet.

Ein Festlegen einer Technologie, welche im eUICC zu verwenden ist, wird vorzugsweise auf an sich bekannte Weise beim Hochfahren des Teilnehmeridentitäsmoduls eUICC im mobilen Endgerät durchgeführt und umfasst typischerweise die Ausführung folgender Funktionen.
SELECT MF: Auswählen eines MF und hiermit Erkennen, ob ADFs vorgesehen sind.
SELECT EF_Dir: EF_Dir enthält die application identifier AIDs aller auf dem eUICC vorhandenen ADFs.
SELECT ADF: Auswählen eines speziellen ADF aus der Auflistung im EF_Dir und hierdurch Festlegen des speziellen ADF und somit der Technologie gemäß dem speziellen ADF.

In der Regel wird das Hochfahren des eUICC auf dem Basiskanal logical channel 0 durchgeführt. Hierdurch ist nach dem Hochfahren die dem Basiskanal logical channel 0 entsprechende Technologie (und das entsprechende ADF) festgesetzt.

### Zitierter Stand der Technik

[1] SGP02-Remote-Provisioning-Architecture-for-Embedded-UICC-Technical-Specification-v2.0, 13 October 2014, GSMA
[2] DE 10 2012 018 540 A1
[3] WO 2013/075873 A1
[4] WO 2014/131785 A1
[5] ISO / IEC 7816-4, " Information technology - Identification cards - Integrated circuit(s) cards with contacts - Part 4: Interindustry commands for interchange " , 1995
[6] WO 2007/133139 A1
[7] US 2012/0106533 A1

## Patentansprüche

1. Verfahren zum Kommunizieren eines in einem Endgerät implementierten oder implementierbaren Teilnehmeridentitätsmoduls (eUICC), in dem mindestens ein Profil zu Nutzung des mobilen Endgeräts in einem Mobilfunknetzwerk eingerichtet ist, gegenüber einem Server,
bei welchem Verfahren eine Status-Nachricht (m1), durch welche eine Statusänderung des Profils angezeigt wird, vom Teilnehmeridentitätsmodul (eUICC) an den Server gesendet wird, wobei vor dem Senden der Status-Nachricht (m1) im Teilnehmeridentitätsmodul (eUICC) ein Schritt des Ermittelns einer Technologie durchgeführt wird, in welchem ermittelt wird, welcher Technologie das Profil entspricht, und das Senden konform mit der Technologie durchgeführt wird, und
wobei die Technologie in einem Applikationsdatenfeld (ADF) des Profils festgelegt ist.

2. Verfahren nach Anspruch 1, wobei als Server ein Subscription Management Server, insbesondere SubMan Secure Router (SM-SR), vorgesehen ist.

3. Verfahren nach Anspruch 1 oder 2, wobei als Technologie 3GPP oder / und 3GPP2 vorgesehen ist.

4. Verfahren nach einem der Ansprüche 1 bis 3, wobei die Statusänderung eine Aktivierung oder eine Deaktivierung des Profils ist.

5. Verfahren nach einem der Ansprüche 1 bis 4, wobei das Profil (P1) zunächst in einem aktiven Status ist, und wobei durch die Status-Nachricht (m1) ein Profil-Wechsel von dem Profil (P1) zu einem weiteren im Teilnehmeridentitätsmodul implementierten Profil (P2) angezeigt wird.

6. Verfahren nach Anspruch 5, wobei
- zunächst das Profil im Teilnehmeridentitätsmodul als aktives Profil (P1) gestaltet ist, das einen aktiven Status hat;
- zusätzlich zu dem Profil mindestens ein weiteres Profil implementiert ist, das als inaktives Profil (P2) gestaltet ist, das einen inaktiven Status hat, wobei vorzugsweise - zumindest meistens
- nur jeweils ein Profil auf einmal in einem aktiven Status ist;
- bei dem Verfahren ein Profil-Wechsel durchgeführt wird, indem das zunächst aktive Profil (P1) deaktiviert wird, so dass es in einen inaktiven Status versetzt wird, und eines der weiteren Profile (P2) aktiviert wird, so dass das weitere Profil (P2) in einen aktiven Status versetzt wird; und
- nach dem Profil-Wechsel die Status-Nachricht (m1) gemäß Anspruch 5 an den Server gesendet wird.

7. Verfahren nach einem der Ansprüche 1 bis 6, wobei anlässlich des Schritts des Ermittelns der Technologie, auf Grundlage eines Ergebnisses des Ermittelns, ein oder mehrere Kommunikationswege festgelegt werden, welche zur Kommunikation des Teilnehmeridentitätsmoduls (eUICC) gegenüber dem Server nachfolgend verwendet werden, insbesondere mehrere gemäß einer Anwendungsvorschrift, insbesondere Priorisierung oder Auswahl, geordnete Kommunikationswege, wobei weiter insbesondere jeweils ein Kommunikationsweg einer Technologie zugeordnet ist.

8. Verfahren nach Anspruch 7, wobei die Kommunikationswege einen oder mehrere der folgenden umfassen: eine Datenverbindung, eine Short-Message-Service-Verbindung (SMS), eine Sprachnachrichten-Verbindung, eine SS-Strings-Verbindung, eine USSD-Strings-Verbindung.

9. Verfahren nach Anspruch 7 oder 8, wobei in einem einzelnen Profil zumindest zwei Teilbereiche vorgesehen sind, die unterschiedlichen Technologien (USIM; CSIM) entsprechen, und wobei für die zumindest zwei unterschiedlichen Technologien (USIM; CSIM) jeweils ein unterschiedlicher Kommunikationsweg (USIM: LTE Datenverbindung; CSIM: Sprachverbindung) festgelegt wird.

10. Verfahren nach einem der Ansprüche 1 bis 9, wobei die Status-Nachricht (m1) vom Teilnehmeridentitätsmodul (eUICC) an den Server (SM-SR) in ein 3-way-Handshake-Protokoll eingebettet ist, wobei die Status-Nachricht als erste Nachricht (m1) gesendet wird, wobei gemäß dem 3-way-Handshake-Protokoll nach dem Senden der ersten Nachricht (m1) eine zweite Nachricht (m2) vom Server (SM-SR) an das Teilnehmeridentitätsmodul (eUICC) zu senden ist und nach dem Senden der zweiten Nachricht (m2) eine dritte Nachricht (m3) vom Teilnehmeridentitätsmodul (eUICC) an den Server (SM-SR) zu senden ist.

11. Verfahren nach Anspruch 10, wobei Nachrichten, mit denen ein Profilwechsel mitgeteilt wird, in einem 3-way-Handshake-Protokoll eingebettet kommuniziert werden, und andere Nachrichten in einem 2-way-Handshake-Protokoll eingebettet kommuniziert werden.

12. Verfahren nach einem der Ansprüche 1 bis 11, wobei der Schritt des Ermittelns einer Technologie durchgeführt wird, indem ein Parameter, der einen für eine Technologie spezifischen Parameter-Wert hat, ermittelt wird.

13. Verfahren nach Anspruch 12, wobei der Parameter ermittelt wird, indem ein Parameterfeld (ADF) ausgelesen wird, insbesondere indem ein Kommando (AUTHENTICATE; PROVIDE LOCATION INFORMATION) im Teilnehmeridentitätsmodul verarbeitet wird, anlässlich dessen Verarbeitung der Parameter verwendet wird, und wobei anlässlich der Verarbeitung das Parameterfeld ausgelesen wird.

14. Verfahren nach einem der Ansprüche 1 bis 13, wobei der Technologie ein logischer Kanal gemäß ISO/IEC 7816-4, insbesondere der Basiskanal Kanal 0, zugeordnet ist oder ggf. jeder Technologie ein eigener logischer Kanal gemäß ISO/IEC 7816-4 zugeordnet ist.

## Claims

1. Method for communicating a subscriber identity module (eUICC) which is implemented or can be implemented in a terminal and in which at least one profile is configured for use of the mobile terminal in a mobile network, to a server,
in which method a status message (m1), by means of which a status change of the profile is indicated, is transmitted by the subscriber identity module (eUICC) to the server, wherein, prior to the transmission of the status message (m1), a step of determining a technology is carried out in the subscriber identity module (eUICC), in which step it is determined which technology the profile corresponds to, and the transmission is carried out in conformance with the technology, and
wherein the technology is specified in an application data field (ADF) of the profile.

2. Method according to claim 1, wherein a subscription management server, in particular a SubMan Secure Router (SM-SR) is provided as the server.

3. Method according to either claim 1 or claim 2, wherein 3GPP and/or 3GPP2 are provided as technology.

4. Method according to any of claims 1 to 3, wherein the status change is an activation or a deactivation of the profile.

5. Method according to any of claims 1 to 4, wherein the profile (P1) is initially in an active status and wherein a profile change from the profile (P1) to a further profile implemented in the subscriber identity module (P2) is indicated by the status message (m1).

6. Method according to claim 5, wherein
- the profile in the subscriber identity module is initially designed as an active profile (P1) which has an active status;
- in addition to the profile, at least one further profile is implemented which is designed as an inactive profile (P2) which has an inactive status, wherein preferably
- at least usually - only one profile is in an active status at a time in each case;
- in the method, a profile change is carried out by the initially active profile (P1) being deactivated such that it is set to an inactive status, and one of the further profiles (P2) being activated such that the further profile (P2) is set to an active status; and
- after the profile change, the status message (m1) according to claim 5 is transmitted to the server.

7. Method according to any of claims 1 to 6, wherein, during the step of determining the technology, based on a result of the determination, one or more communication channels are specified which are subsequently used for communicating the subscriber identity module (eUICC) to the server, in particular a plurality of communication channels ordered according to an instruction for use, in particular prioritization or selection, wherein a communication channel is furthermore in particular assigned to a technology in each case.

8. Method according to claim 7, wherein the communication channels comprise one or more of the following: a data connection, a short message service connection (SMS), a voice message connection, an SS string connection, and a USSD string connection.

9. Method according to either claim 7 or claim 8, wherein at least two portions which correspond to different technologies (USIM; CSIM) are provided in a single profile, and wherein a different communication channel (USIM: LTE data connection; CSIM: voice connection) is specified in each case for the at least two different technologies (USIM; CSIM).

10. Method according to any of claims 1 to 9, wherein the status message (m1) from the subscriber identity module (eUICC) to the server (SM-SR) is embedded in a 3-way handshake protocol, wherein the status message is transmitted as the first message (m1), wherein, according to the 3-way handshake protocol, after the transmission of the first message (m1), a second message (m2) is to be transmitted from the server (SM-SR) to the subscriber identity module (eUICC) and, after the transmission the second message (m2), a third message (m3) is to be transmitted from the subscriber identity module (eUICC) to the server (SM-SR).

11. Method according to claim 10, wherein messages by means of which a profile change is communicated are communicated embedded in a 3-way handshake protocol, and other messages are communicated embedded in a 2-way handshake protocol.

12. Method according to any of claims 1 to 11, wherein the step of determining a technology is carried out by a parameter being determined which has a parameter value specific to a technology.

13. Method according to claim 12, wherein the parameter is determined by a parameter field (ADF) being read out, in particular by a command (AUTHENTICATE; PROVIDE LOCATION INFORMATION) being processed in the subscriber identity module, during the processing of which command the parameter is used, and wherein the parameter field is read out during the processing.

14. Method according to any of claims 1 to 13, wherein a logical channel in accordance with ISO/IEC 7816-4, in particular the base channel 0, is assigned to the technology, or, if applicable, a separate logical channel in accordance with ISO/IEC 7816-4 is assigned to each technology.

## Revendications

1. Procédé pour la communication d'un module d'identité de l'abonné (eUICC) implémenté ou pouvant être implémenté dans un terminal, dans lequel au moins un profil est adapté pour l'utilisation du terminal mobile dans un réseau de communication mobile, vis-à-vis d'un serveur,
procédé dans lequel un message d'état (m1) indiquant un changement d'état du profil est envoyé au serveur par le module d'identité de l'abonné (eUICC),
dans lequel, avant l'envoi du message d'état (m1) dans le module d'identité de l'abonné (eUICC), une étape de détermination d'une technologie est exécutée, dans laquelle la technologie correspondant au profil est déterminée et l'envoi est réalisé conformément à la technologie, et
dans lequel la technologie est définie dans un champ de données d'application (ADF) du profil.

2. Procédé selon la revendication 1, dans lequel un serveur de gestion d'abonnements (Subscription Management Server), en particulier un routeur sécurisé SubMan (SM-SR, SubMan Secure Router) est prévu en tant que serveur.

3. Procédé selon la revendication 1 ou 2, dans lequel 3GPP et/ou 3GPP2 est prévu en tant que technologie.

4. Procédé selon l'une des revendications 1 à 3, dans lequel le changement d'état est une activation ou une désactivation du profil.

5. Procédé selon l'une des revendications 1 à 4, dans lequel le profil (P1) est initialement dans un état actif, et dans lequel un changement de profil du profil (P1) à un autre profil (P2) implémenté dans le module d'identité de l'abonné est indiqué au moyen du message d'état (m1).

6. Procédé selon la revendication 5, dans lequel
- le profil dans le module d'identité de l'abonné est initialement conçu comme un profil actif (P1) ayant un état actif ;
- en plus du profil, au moins un profil supplémentaire conçu comme un profil inactif (P2) ayant un état inactif, est implémenté, dans lequel de préférence - au moins le plus souvent - un seul profil à la fois est dans un état actif ;
- dans le procédé, un changement de profil est effectué, en désactivant le profil initialement actif (P1), de sorte qu'il est mis dans un état inactif, et en activant l'un des profils supplémentaires (P2), de sorte que le profil supplémentaire (P2) est mis dans un état actif ; et
- après le changement de profil, le message d'état (m1) selon la revendication 5 est envoyé au serveur.

7. Procédé selon l'une des revendications 1 à 6, dans lequel lors de l'étape de détermination de la technologie, une ou plusieurs voies de communication sont définies sur la base d'un résultat de la détermination, lesquelles voies de communication sont ensuite utilisées pour la communication du module d'identité de l'abonné (eUICC) vis-à-vis du serveur, en particulier plusieurs voies de communication ordonnées en fonction d'une instruction d'application, en particulier une hiérarchisation ou une sélection, dans lequel en particulier une voie de communication est en outre respectivement associée à une technologie.

8. Procédé selon la revendication 7, dans lequel les voies de communication comprennent un ou plusieurs des éléments suivants : une connexion de données, une connexion par service de messages courts (SMS, Short-Message-Service), une connexion par messages vocaux, une connexion par chaînes SS, une connexion par chaînes USSD.

9. Procédé selon la revendication 7 ou 8, dans lequel dans un profil individuel sont prévues au moins deux zones partielles qui correspondent à différentes technologies (USIM ; CSIM), et dans lequel pour les au moins deux technologies différentes (USIM ; CSIM), une voie de communication différente (USIM : connexion de données LTE ; CSIM : connexion vocale) est respectivement définie.

10. Procédé selon l'une des revendications 1 à 9, dans lequel le message d'état (m1) du module d'identité de l'abonné (eUICC) au serveur (SM-SR) est inséré dans un protocole d'établissement de liaison à 3 voies, dans lequel le message d'état est envoyé en tant que premier message (m1), dans lequel selon le protocole d'établissement de liaison à 3 voies, après l'envoi du premier message (m1), un deuxième message (m2) doit être envoyé au module d'identité de l'abonné (eUICC) par le serveur (SM-SR), et après l'envoi du deuxième message (m2), un troisième message (m3) doit être envoyé au serveur (SM-SR) par le module d'identité de l'abonné (eUICC).

11. Procédé selon la revendication 10, dans lequel des messages, au moyen desquels un changement de profil est notifié, sont communiqués de manière insérée dans un protocole d'établissement de liaison à 3 voies, et les autres messages sont communiqués de manière insérée dans un protocole d'établissement de liaison à 2 voies.

12. Procédé selon l'une des revendications 1 à 11, dans lequel l'étape de détermination d'une technologie est exécutée, en déterminant un paramètre ayant une valeur de paramètre spécifique à une technologie.

13. Procédé selon la revendication 12, dans lequel le paramètre est déterminé en lisant un champ de paramètre (ADF), en particulier en traitant une commande (AUTHENTICATE ; PROVIDE LOCATION INFORMATION) dans le module d'identité de l'abonné, le paramètre étant utilisé lors de son traitement, et dans lequel le champ de paramètres est lu lors du traitement.

14. Procédé selon l'une des revendications 1 à 13, dans lequel un canal logique est associé à la technologie conformément à l'ISO/IEC 7816-4, en particulier le canal de base canal 0, ou, le cas échéant, un canal logique distinct est associé à chaque technologie conformément à l'ISO/IEC 7816-4.
